(19)

Europäisches Patentamt

European Patent Office

Office européen des brevets

(11)     EP 4 411 671 A1

(12)                          EUROPEAN PATENT APPLICATION

(43) Date of publication:
**07.08.2024 Bulletin 2024/32**

(21) Application number: **23305147.3**

(22) Date of filing: **03.02.2023**

(51) International Patent Classification (IPC):
**G06V 20/40** (2022.01)      **G06V 40/20** (2022.01)
**G06V 10/774** (2022.01)      **G06V 10/82** (2022.01)

(52) Cooperative Patent Classification (CPC):
**G06V 20/46; G06V 10/774; G06V 10/82;**
**G06V 20/44; G06V 40/20;** G06F 2218/12

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicants:
• **TOYOTA JIDOSHA KABUSHIKI KAISHA**
  **Aichi-Ken 471-8571 (JP)**
• **Institut National de Recherche en Informatique et**
  **en Automatique**
  **78153 Le Chesnay Cedex (FR)**

(72) Inventors:
• **FRANCESCA, Gianpiero**
  **1140 BRUSSELS (BE)**

• **GARATTONI, Lorenzo**
  **1140 BRUSSELS (BE)**
• **KONG, Quan**
  **TOKYO, 103-0022 (JP)**
• **YANG, Di**
  **06902 VALBONNE (FR)**
• **BREMOND, François**
  **06902 VALBONNE (FR)**

(74) Representative: **Cabinet Beau de Loménie**
**158, rue de l'Université**
**75340 Paris Cedex 07 (FR)**

Remarks:
Amended claims in accordance with Rule 137(2)
EPC.

(54)     **METHOD AND SYSTEM FOR TRAINING AN ENCODER MODEL**

(57)     A computer-implemented method for training an encoder model (f) to extract features from an input signal comprising a sequence of frames, the computer-implemented method comprising:
- obtaining at least one subsequence (20) from at least one such input signal;
- encoding (22) the at least one subsequence with the encoder model (f);
- offsetting the encoded at least one subsequence (24) based on a shift between the sequence of the at least one input signal and the at least one subsequence;
- training (30) the encoder model (f) based on the offset encoded at least one subsequence (26).

FIG.2

EP 4 411 671 A1

**Description**

BACKGROUND OF THE INVENTION

1. Field of the invention

The present disclosure relates to the field of machine learning, and more particularly to a computer-implemented method for training an encoder model to extract features from an input signal comprising a sequence of frames. The method may find applications in all kinds of industries, including the automotive industry. For instance, the method may be used to train a machine learning model to extract more accurate representations (features) of data from a vehicle's environment in order to adequately control the vehicle, or to monitor and support human activities in places such as a factory. In particular, the present disclosure further relates to a method for classifying actions in a visual input.

2. Description of Related Art

In the field of machine learning, encoder models extract features (also known as a representation or a latent representation) from input data, which features are then used for downstream tasks such as detection or classification. It is therefore desired that the features convey an accurate representation of the input data.

Encoder model training methods for may rely on data augmentation in order to increase the amount of training data and to robustify the training. For instance, in image-based tasks, a common augmentation method relates to random cropping. However, when extending this idea onto videos, which are endowed with additional temporal information, cropping in the spatial dimension is not sufficient for training an effective visual encoder. Learning representations that are invariant to time changes may be considered. However, for downstream tasks involving temporal relationships, a representation invariant to temporal shifts might omit valuable information. For instance, in differentiating actions such as 'enter' and 'leave', the temporal order is fundamental. Hence a trained visual encoder remains challenged in handling downstream video understanding tasks such as fine-grained human action recognition.

More generally, when the input signal comprises a sequence of frames, enforcing feature persistence over the sequence leads to a loss of pertinent information related to the order relationships. Therefore, there is a need for a new type of training method.

The following references disclose various technologies relating to machine learning:

[REF. 1] Christoph Feichtenhofer, Haoqi Fan, Jitendra Malik, and Kaiming He. Slowfast networks for video recognition. In ICCV, 2019.
[REF. 2] K. Hara, H. Kataoka, and Y. Satoh. Learning spatio-temporal features with 3D residual networks for action recognition. In ICCVW, 2017.
[REF. 3] Jean-Bastien Grill, Florian Strub, Florent Altché, Corentin Tallec, Pierre H. Richemond, Elena Buchatskaya, Carl Doersch, Bernardo Avila Pires, Zhaohan Daniel Guo, Mohammad Gheshlaghi Azar, Bilal Piot, Koray Kavukcuoglu, Rémi Munos, and Michal Valko. Bootstrap your own latent: A new approach to self-supervised learning. In NeurIPS, 2020.
[REF. 4] Kaiming He, Haoqi Fan, Yuxin Wu, Saining Xie, and Ross Girshick. Momentum contrast for unsupervised visual representation learning. In CVPR, 2020.
[REF. 5] Aaron van den Oord, Yazhe Li, and Oriol Vinyals. Representation learning with contrastive predictive coding. In arXiv:1807.03748, 2018.
[REF. 6] Z. Wu, Y. Xiong, S. X. Yu, and D. Lin. Unsupervised feature learning via non-parametric instance discrimination. In CVPR, 2018.
[REF. 7] Laurens van der Maaten and Geoffrey Hinton. Visualizing data using t-SNE. JMLR, 2008.

SUMMARY

The present disclosure relates to a computer-implemented method for training an encoder model to extract features from an input signal comprising a sequence of frames, the computer-implemented method comprising:

- obtaining at least one subsequence from at least one such input signal;
- encoding the at least one subsequence with the encoder model;
- offsetting the encoded at least one subsequence based on a shift between the sequence of the at least one input signal and the at least one subsequence;
- training the encoder model based on the offset encoded at least one subsequence.

The method, hereinafter referred to as the training method for conciseness, may be carried out by one or more computers.

The encoder model may be a machine learning model. A machine learning model may comprise one or more mathematical expressions configured to process the input signal in order to output a representation thereof, generally in another space called latent space, representation space or feature space: this representation corresponds to the features. Weights of the machine learning model may be iteratively updated by the training method.

The machine learning model may comprise an artificial neural network. An artificial neural network (ANN) is a computational model with one or more neurons, each neuron having a transfer function. The ANN therefore has a global transfer function that allows the calculation of at least one output as a function of at least one input. The neurons may be structured in one or more layers. The transfer functions of each neuron or the relative weights of the neurons in the network can be weighted by coefficients called synaptic weights (or simply weights) and bias. The weights can be modulated according to the training of the ANN. During the training process, the ANN adapts its synaptic weights and biases to conform to training situations, possibly with some tolerance.

A sequence of frames is an ordered series of frames along one dimension, known as the succession dimension, which can be e.g. time or space. A few non-limiting examples are given below:

- the sequence of frames may be an audio track, i.e. a succession of sounds over time;
- the sequence of frames may be a video, i.e. a succession of images over time, or a plurality of images;
- the sequence of frames may be a three-dimensional (3D) image, seen as a succession of two-dimensional images over a succession dimension which is a third spatial dimension;
- the sequence of frames may be a strip of images (e.g. satellite images), i.e. a succession of images over a spatial dimension;
- the sequence of frames may be an electrical signal (e.g. an electrocardiogram input), i.e. a succession of electrical values over time.

The input signal may be obtained from a sensor, e.g. a microphone, an imaging device such as a camera, electrodes, etc. The input signal may be pre-processed.

The contents of the frames may be such that a plurality of frames forms a pattern, and the succession dimension may have some relevance in determining what the pattern is.

The training method comprises obtaining at least one subsequence. As used herein, for conciseness and unless the context indicates otherwise, "a", "an", and "the" are intended to refer to "at least one" or "each" and to include plural forms as well. Conversely, generic plural forms encompass singular embodiments.

The subsequence is a part of the sequence and comprises a subset of the frames of the sequence, preferably in the same order. That, is, the subsequence is shorter than the sequence in the succession dimension. The subset of frames is preferably a continuous subset in the succession direction. As the first frame of the subsequence may not be the same as the first frame of the sequence (namely, the first frame of the subsequence corresponds to the n-th frame of the sequence, n>1), there is a shift, in the succession dimension, between the sequence and the subsequence. The shift is generally non-zero but may be zero if the subsequence starts at with the first frame of the sequence. Besides, the last frame of the subsequence may not be the same as the last frame of the sequence. The number of frames of the subsequence may be fixed or vary from one subsequence to the other.

When a plurality of subsequences is obtained, the shift relative to the sequence may vary from one subsequence to another.

Thanks to the training based not on the encoded subsequence itself, but on the offset encoded subsequence, the encoder model is trained to extract features which are aware of the succession dimension. Therefore, the succession dimension of the input signal can be appropriately taken into account for any downstream task. In addition, the encoder model trained in this manner has the ability to better generalize onto input signals not seen during the training phase.

Optionally, the training comprises self-supervised learning. Self-supervised learning is known per se in the art and comprises training a model on a training dataset without explicit ground-truth labels, wherein the training extracts secondary data from the training dataset to evaluate the predictions of the model and help the model adjust itself.

Optionally, the training comprises contrastive learning. Contrastive learning is known per se in the art and is a prominent variant in learning self-supervised representations. The associated objective is to minimize the distance between latent representations of positive pairs, while maximizing the distance between latent representations of negative pairs. For instance, a visual encoder aims to learn the invariance of multiple views of a scene, which constitute positive pairs, by extracting generic features of the frames.

With self-supervised or contrastive learning, the encoder model can be trained in a way which is not biased by the downstream task. Therefore, the trained encoder model is more robust and the extracted features more accurate.

Optionally, the at least one subsequence comprises one subsequence as a query and at least another subsequence as at least one key, and the encoder model is trained based on a distance between the offset encoded query and one or more of the offset encoded at least one key.

The query is a subsequence and each of the at least one key is another subsequence. The query and the at least one key are obtained from the same sequence and therefore represent the same input signal (e.g. different views of a same scene). By training the encoder model based on a distance between the offset encoded query and the offset encoded key, the encoder model can be trained to treat different subsequences of the same sequence alike.

In particular, optionally, the training comprises updating the encoder model to minimize a distance between the offset encoded query and an offset encoded at least one key obtained from the same input signal as the query. The distance may be a distance in the representation space. Updating the encoder model may comprise updating weights of the encoder model. In carrying out such an update, the encoder model can be trained to extract similar features from different subsequences of the same input signal. For instance, in the context of contrastive learning, the query and key may act as a positive pair.

Conversely, the training may comprise updating the encoder model to maximize a distance between the offset encoded query and an offset encoded at least one other key obtained from a different input signal than the query. In carrying out such an update, the encoder model can be trained to extract different features from subsequences obtained from different input signals. For instance, in the context of contrastive learning, the query and the other key may act as a negative pair.

Optionally, the query and the at least one key are obtained by data augmentation of the input signal. Data augmentation may include at least one of cropping, resizing, flipping, color distortion, Gaussian blurring, etc., or a combination thereof. These data augmentation operations are known per se in the art.

Optionally, one or more of the encoded at least one subsequence is a vector and the offsetting changes at least one component of the vector. This ensures that the succession dimension is properly integrated in the offset encoded subsequence. As a consequence, the features extracted by the encoder model are more accurate.

Optionally, the offsetting leaves at least one component of the vector unchanged. This ensures that encoding information about the order relationships does not completely alter the encoded information about the frames themselves. As a consequence, the features extracted by the encoder model are more accurate.

Optionally, the offsetting comprises applying a transformation to the encoded at least one subsequence, wherein the transformation is based on the shift and the transformation is learned during the training of the encoder model. The transformation is the function that transforms the encoded subsequence into the offset encoded subsequence. The transformation is thus a transformation within the representation space. This representation takes the shift into account.

Since the transformation is learned during the training of the encoder model, the training trains the encoder model globally and an adjustment takes place automatically between the transformation and the weights of the encoder model itself. In addition, this enables not to explicitly model the succession dimension in the representation space.

Optionally, the offsetting comprises inputting the shift and the encoded at least one subsequence to a shift encoder model, wherein the shift encoder model outputs a shift vector and the shift vector is combined to the encoded at least one subsequence. The shift vector and the encoded subsequence may be combined in a variety of ways, e.g. by a linear combination, a multiplication, etc.

In some embodiments, the shift vector and the encoded subsequence may have the same dimensions, particularly in a first variant where the shift vector and the encoded subsequence are combined through a linear combination.

The shift encoder model may be a model different from the encoder model. The shift encoder model may be a machine learning model. Optionally, the shift encoder model is trained during the training of the encoder model.

Optionally, the offsetting comprises obtaining a basis of a subspace of an output space of the encoder model, and combining the shift vector and the encoded at least one subsequence based on the basis. Working on a subspace of the output space of the encoder model (namely, a subspace of the representation space) enables to decrease the resources required for encoding the succession dimension, and facilitates keeping some components of the encoded subsequence unchanged, as mentioned before.

Optionally, in a second variant, the offsetting comprises applying an attention mechanism, and the shift vector and the encoded at least one subsequence are combined using attention weights of the attention mechanism in different directions of the basis. Attention mechanisms focus on the salient part of the input signal relative to the target task. Typically, attention mechanisms emphasize the region-of-interest. The second variant corresponds to learning the weights of the directions of the basis.

For instance, to implement this attention mechanism, the offsetting may comprise projecting the shift vector onto the basis and multiplying the projected shift vector by the encoded at least one subsequence.

Optionally, in a third variant, the offsetting comprises projecting the shift vector onto the basis and calculating a linear combination of the projected shift vector and the encoded at least one subsequence. For instance, the projected shift vector and the encoded at least one subsequence may be merely added to each other. The third variant corresponds to learning the norm of the shift vector along the directions of the basis.

Optionally, the sequence of frames is a sequence over time and the shift is a time shift. As the case may be, the succession dimension is a time dimension, and for the sake of conciseness, the term "temporal" may refer more broadly to characteristics along the succession dimension, in contrast to "spatial" which may broadly refer to the other dimensions, namely the dimensions of the frames.

Optionally, the input signal is selected from a group comprising a plurality of images, a video, an audio track, an electrical input or a combination thereof. For instance, optionally, each frame comprises an image, in particular a digital image. The image may be a 1D image, 2D image, 3D image, etc. As shown in the above examples, the succession dimension of the images may be time, space, or yet another succession dimension. The succession of frames may have the same dimensionality or not as a single frame.

Optionally, the obtaining the at least one subsequence comprises spatio-temporal cropping of the input signal. That is, only some frames of the sequence are kept in the subsequence, and the content of these frames is partially kept in the subsequence.

The present disclosure further relates to a computer-implemented method for classifying actions in a visual input, the computer-implemented method comprises training an encoder model by the above-described training method, inputting the visual input to the encoder model and inputting an output of the encoder model to an action classifier. Such a method, referred to hereinafter as the classification method, enables robust action classification, including for actions where time has an important semantic role. The visual input may be a sequence of images, e.g. a video. The visual input may be obtained by acquiring a sequence of images, e.g. through an image acquisition module such as a camera, or getting an already acquired sequence of images from a database, e.g. a local or distant server or the like.

The present disclosure further relates to a computer program set including instructions for executing the steps of the above-described training method or classification method when said program set is executed by at least one computer. The computer program set includes one or more computer programs. Any or all programs of the set can use any programming language and take the form of source code, object code or a code intermediate between source code and object code, such as a partially compiled form, or any other desirable form.

The present disclosure further relates to a recording medium readable by at least one computer and having recorded thereon at least one computer program including instructions for executing the steps of the above-described training method or classification method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk. Alternatively, the recording medium can be an integrated circuit in which the program is incorporated, the circuit being adapted to execute the method in question or to be used in its execution.

The present disclosure further relates to a system for training an encoder model to extract features from an input signal comprising a sequence of frames, the system comprising:

- an obtaining module configured to obtain at least one subsequence from at least one such input signal;
- an encoder module configured to encode the at least one subsequence with the encoder model;
- an offsetting module configured to offset the encoded at least one subsequence based on a shift between the sequence of the at least one input signal and the at least one subsequence;
- a training module configured to train the encoder model based on the offset encoded at least one subsequence

The system, or training system, may be configured to carry out the above-mentioned training method, and may have part or all of the above-described features. The system may have the hardware structure of a computer.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- Fig. 1 is a block diagram of a training system according to an embodiment;
- Fig. 2 is a diagram showing the principle of a training method according to an embodiment;
- Fig. 3 is a diagram illustrating the training method according to an embodiment;
- Fig. 4 includes charts showing a representation of features for "Enter" and "Leave" actions, extracted (a) from an encoder model trained as per the training method of an embodiment and (b) from an encoder model of the prior art.

DETAILED DESCRIPTION OF EMBODIMENTS

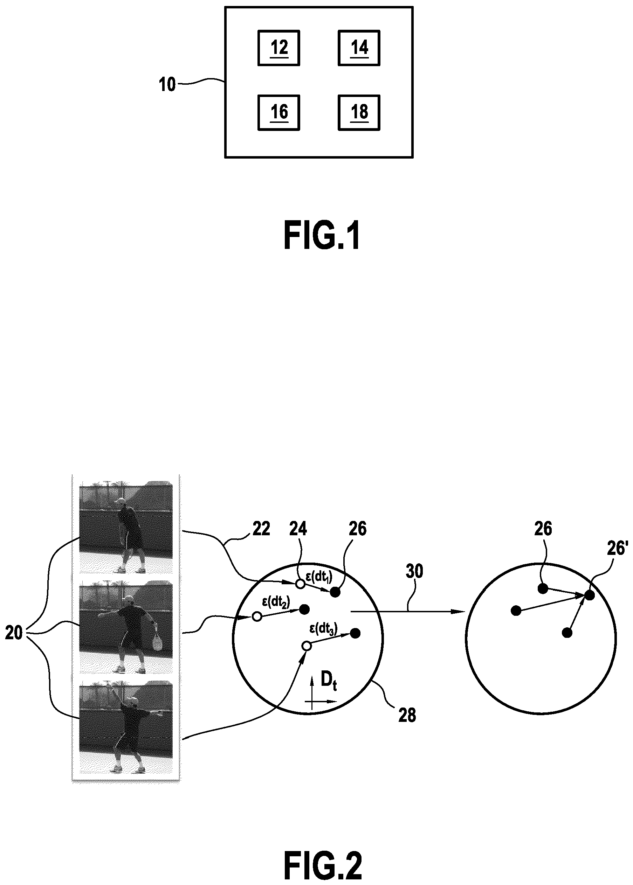

Figure 1 shows a block diagram of a training system 10 for training an encoder model to extract features from an input signal comprising a sequence of frames, according to embodiments of the present disclosure. The training system 10 comprises an obtaining module 12 configured to obtain at least one subsequence from at least one such input signal, an encoder module 14 configured to encode the at least one subsequence with the encoder model, an offsetting module 16 configured to offset the encoded at least one subsequence based on a shift between the sequence of the at least one input signal and the at least one subsequence, and a training module 18 configured to train the encoder model based on the offset encoded at least one subsequence.

The training system 10 may comprise an electronic circuit, a processor (shared, dedicated, or group), a combinational logic circuit, a memory that executes one or more software programs, and/or other suitable components that provide the described functionality. In other words, the training system 10 may be a computer device. The training system 10 may be connected to a memory, which may store data, e.g. at least one computer program which when executed, carries out the training method according to the present disclosure. In particular, the training system or the memory may store software which comprises the neural network according to the present disclosure.

The training system 10, in particular the obtaining module 12, has an input for receiving a sequence of frames.

The encoder model may be used in a computer-implemented classification method for classifying actions in a visual input, the computer-implemented method comprising training the encoder model as will be described later, e.g. with the training system 10, inputting the visual input to the encoder model and inputting an output of the encoder model to an action classifier. Once the training has been carried out, only the inputting steps need to be performed.

If the classification method is to be carried out in real time, the visual input may be acquired in real time by an image acquisition module, such as a video acquisition module, e.g. a camera or the like (video cameras, photo cameras, etc.). Alternatively or in addition, the visual input may be acquired beforehand, and obtained by the classification method later, e.g. in case of post-processing. Thus, the classification method may comprise obtaining or acquiring the visual input.

The action classifier may be a neural network. Action classifiers are known per se in the art.

The functions of the modules 12-18 will be described in more detail with reference to a training method according to an embodiment.

Figure 2 shows an overview of a training method according to an embodiment. The training method as described herein, also referred to as Latent Time Navigation (LTN), is a computer-implemented method for training an encoder model to extract features from an input signal comprising a sequence of frames.

Hereinafter, an embodiment of the training method is detailed with reference to Figs. 2 to 4, focusing on an application to extracting spatio-temporal features from a video, i.e. extracting features from an input signal, wherein the features are spatio-temporal information and the sequence of frames is a sequence of images over time. However, the principles explained herein can be generalized by the skilled person to other input signals than videos, and other succession dimensions than time. For example, the input signal may be selected from a group comprising a plurality of images, a video, an audio track, an electrical input, etc. or a combination thereof.

More generally, in the following, the sequence of frames is a sequence over time and the shift is a time shift. Accordingly, the offset encoded subsequences 26 are also referred to as time-blended representations, which are sensitive to time and able to model subtle motion within an action.

The objective is to train a generic encoder model f, here a visual encoder, for extracting accurate spatio-temporal features from video clips. The encoder model f is designed to be efficient for downstream fine-grained action recognition tasks.

As set out above, the training method comprises obtaining at least one subsequence 20 (Fig. 2 shows three subsequences 20) from an input signal. Thus, subsequences 20 are obtained from an input video, e.g by a data augmentation technique including random temporal shifts. This enables to generate multiple positive views for a given input video, and thus to obtain multiple representations from different views.

The training method further comprises encoding the subsequences 20 with the encoder model f (represented by arrow 22 in Fig. 2). Thus, respective representations (or features) are obtained for the subsequences. The extracted features belong to a representation space 28 in which the encoded subsequences 24 are then to be offset.

Indeed, unlike the prior art which employ contrastive learning for these representations, in order to make them invariant to spatio-temporal shifts, the encoded subsequences 24 are moved by different offsets according to their parameterized temporal shifts. That is, the training method comprises offsetting the encoded subsequences 24 based on a shift $dt_i$ (i=1, 2, ...) between the sequence of the input video and the subsequences 20.

Learning is then performed for the new time-blended representations, i.e. the offset encoded subsequences 26. That is, the training method further comprises training the encoder model based on the offset encoded subsequences 26.

In Fig. 2, the arrow 30 represents the training step, which is carried out based on the offset encoded subsequences 26. In this embodiment, the training step comprises contrastive learning. In particular, contrastive learning aims to maximize similarity between the offset encoded subsequences 26 obtained from the same sequence. For instance, as shown in the right-hand portion of Fig. 2, contrastive learning aims to minimize the distance between the offset encoded subsequences 26 obtained from the same sequence, or even cluster them together to a common target representation 26'. The target representation 26' can thus be aware of time shifts compared to other positive pairs and the encoder model f can capture the important motion variances of videos for improving fine-grained action recognition tasks. Contrastive learning will be discussed in greater details below.

More generally, self-supervised learning could be carried out instead of contrastive learning. More generally, other training techniques are encompassed, as long as they are take account of the shift (time shift) of the encoded subsequences 24.

Offsetting the encoded subsequences 24 in the representation space 28 may comprise applying a transformation ε to the encoded subsequences 24. As the transformation is based on the shift which may vary from a subsequence 20 to the other, in Fig. 2, the transformation is noted $\varepsilon(dt_1)$, $\varepsilon(dt_2)$, $\varepsilon(dt_3)$ for the encoded subsequences 24 having shifts $dt_1$, $dt_2$, $dt_3$, respectively.

The transformation ε may be learned during the training 30 of the encoder model f, as will be discussed below.

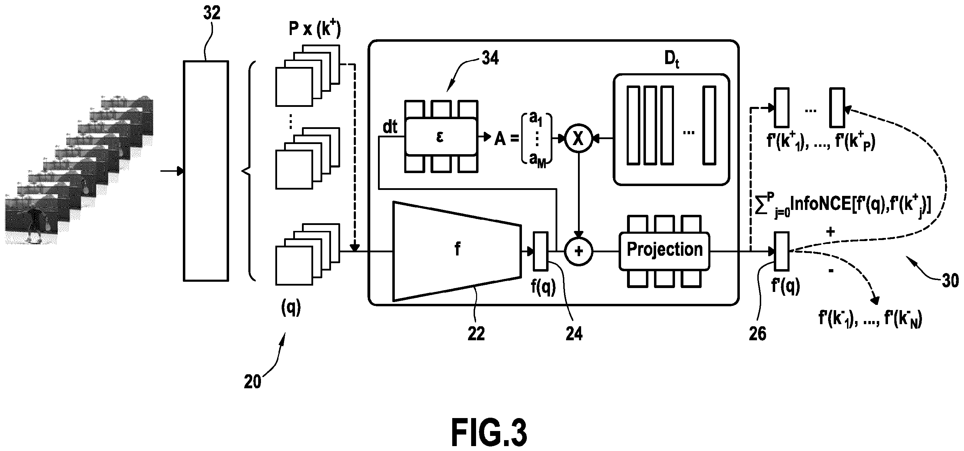

Figure 3 shows, in greater details, steps of the training method for the encoder model f. Specifically, Fig. 3 illustrates the steps carried out at each training iteration.

Given an input video, at least one subsequence 20, preferably a plurality thereof, is obtained from the input video. In particular, the subsequences may comprise a query q and one or more positive keys ( $k_1^+, k_2^+, \ldots, k_P^+$ ). The query and the keys may be generated by data augmentation 32, with different temporal shifts *dt*. For instance, first, a segment of the input video is spatio-temporally cropped by randomly selecting a segment and cropping out a fixed-size box from the same video instance. Image-based augmentations such as random horizontal flip, color distortion and Gaussian blur may be applied in order to generate positive views (i.e. keys) of the input given video at each training iteration. It has been demonstrated that multiple positive samples with large timespans between them are beneficial in downstream performance.

In this embodiment, the encoder model f comprises at least one convolutional neural network (CNN), e.g. 3D-CNN networks [REFS 1, 2], to obtain representations, i.e. encoded subsequences 24, of all clips, namely the query and the keys (*i.e.,* $f(q), f(k_1^+), \ldots, f(k_P^+)$ ). Although Fig. 3 shows only f(q), the other encoded subsequences $f(k_1^+), \ldots, f(k_P^+)$ may be obtained at this step too.

The encoded subsequences 24 may be vectors, in particular *dim*dimensional vectors (i.e. $f(q), f(k_1^+), \ldots, f(k_P^+) \in \mathbb{R}^{1 \times dim}$ ).

Large timespans between positive samples may depict significant changes in human motion. When directly matching $f(q)$ to all positive pairs, the corresponding representations may lose pertinent motion variance caused by time shifts. This might compromise the accuracy of downstream tasks related to fine-grained human motion (*e.g.,* classification of 'Leave/Enter', 'Stand up/Sit down'). Hence, positive pairs are expected to keep an 'offset' along the time-aware components and maintain invariant along the remaining components in the representation space 28.

Therefore, the training method comprises offsetting the encoded subsequences 24 to move $f(q), f(k_p^+)$ to the offset encoded subsequences 26 (time-blended representations) $f'(q, dt_q), f'(k_p^+, dt_p)$ using the time shift value (*e.g.,* noted as $dt_q$ for q) as a parameter. In other words, the offset encoded subsequences are denoted $f'(q, dt_q), f'(k_p^+, dt_p)$. Note that the parameterized time of all samples may be omitted in the notations to simplified formulations (*e.g.,* f' ($q,dt_q$) may be abbreviated as f' ($q$)).

The transformation (*e.g.,* from f(q) to f' ($q,dt_q$)) is thus the 'offset', and this offset, taken into account during the training step, ensures that f(q), $f(k_p^+)$ are time-aware representations.

In particular, the offsetting may change at least one component of the aforementioned vector.

Then, the training method comprises a training step which is here performed by contrastive learning. Contrastive learning aims to maximize the mutual information between f' ($q,dt_q$) and $f'(k_p^+, dt_p)$ and will be detailed below.

The offsetting may be implemented in many different ways, three of which are presented hereinafter. The architecture of Fig. 3 depicts the third variant. While the variants are detailed with respect to the query q, they apply likewise to the keys $k_p^+$.

In a first variant, the offsetting comprises inputting the shift $dt_i$ and the encoded subsequence 24 to a shift encoder model, the shift encoder model outputs a shift vector A and the shift vector A is combined to the encoded subsequence 24. The combination may be a linear combination. For instance, the shift vector A is set as $A = \varepsilon(dt_q, f(q)) \in \mathbb{R}^{1 \times dim}$, from which positive pairs need to be pulled away from the target representation 26' to obtain the time-blended (i.e., invariant) representation in the representation space 28. The linear transformation can be described as Eq. 1.

$$f'(q, dt_q) = f(q) + \varepsilon(dt_q, f(q)) \tag{1}$$

Thus, the first variant comprises a direct linear transformation on video representation f($q$) with $\varepsilon(dt, f(q))$ as the norm.

In other variants, instead of navigating in all the *dim* dimensions of the representation space 28, the representation space 28 is split into time-aware and time-invariant components, and the offsetting may be limited to the time-aware components. In such embodiments, the offsetting comprises obtaining a basis of a subspace of an output space of the encoder model (namely the representation space 28), and combining the shift vector A and the encoded subsequence f(q) based on the basis.

The subspace and/or the basis may be chosen such that the offsetting leaves at least one component of the vector unchanged.

Here, it is proposed to set a learnable basis (also referred to as a dictionary) $D_t = \{d_1, d_2, ..., d_M\}$ with $M \in [1, dim)$ and $d \in \mathbb{R}^{dim \times 1}$ to represent the time-aware components. In particular, $M$ may lie in the range 16-2000. Experiments have shown that setting $M = 64$, e.g. out of $dim = 2048$ dimensions, provides representations which achieve optimal action classification results.

The basis $D_t$ may be orthogonal. Experiments have shown that the orthogonalization of the basis $D_t$ facilitates learning of time-aware action representations. Due to $D_t$ entailing an orthogonal basis, any two directions $d_i$, $d_j$ follow the constraint

$$< d_i, d_j > = \begin{cases} 0 & i \neq j \\ 1 & i = j. \end{cases} \tag{2}$$

$D_t \in \mathbb{R}^{dim \times M}$ $D_t$ is implemented as a learnable matrix. The orthogonality may be satisfied by any desired method, e.g. applying Gram-Schmidt method during each forward pass of the training.

The time shift values *dt* for the randomly selected query (and key) segment may be encoded and parameterized using their absolute time, e.g. the starting time and the end time (*i.e.*, $t_{start}$, $t_{end}$), e.g. in seconds. Specifically, the time shift information may be gathered by weighted sum and normalization, e.g. as follows:

$$dt = \text{Norm}(w_1 \cdot t_{start} + w_2 \cdot t_{end}). \tag{3}$$

The time shift information *dt* may be concatenated with the encoded subsequence f($q$) into a high-dimensional vector $A = \varepsilon(dt, f(q))$ by a mere multi-linear perceptron (MLP) 34, with the purpose of parameterizing the time shift considering different time-blending variants followed by contrastive learning. Note that the shift encoder model (here, the MLP 34) also accepts f($q$) as the input towards learning a video and time specific encoding. The MLP 34 may have one or more hidden layers, in particular two or three hidden layers.

In a second variant, the offsetting comprises applying an attention mechanism, and the shift vector A and the encoded subsequence f(q)) are combined using attention weights of the attention mechanism in different directions of the basis $D_t$. Specifically, the second variants learns the weights of the shift vector along the directions of the basis $D_t$. For instance, an attention mechanism is explicitly implemented to learn a set of attention weights for the positive pairs to be driven by $W \in \mathbb{R}^{1 \times M} = \{w_1, w_2, ..., w_M\} = \text{Softmax}(\varepsilon(dt_q, f(q)))$. The attention weights $W$ are enforcing f($q$) to focus on specific temporal components in $D_t$ according to different time encoding. This transformation can be described as follows:

$$\text{f}'(q, dt_q) = \text{f}(q) \cdot \left( \sum_{i=1}^{M} w_i \cdot d_i \right) = \text{f}(q) \cdot (W \times D_t^T). \qquad (4)$$

In a third variant, illustrated in Fig. 3, the offsetting comprises projecting the shift vector A onto the basis $D_t$ and calculating a linear combination of the projected shift vector A and the encoded at least one subsequence f(q). The idea of this linear transformation method is to model the latent temporal distance. To implement linear transformation along $D_t$, the coefficients by time encoding $A \in \mathbb{R}^{1 \times M} = \{a_1, a_2, \ldots, a_M\} = \varepsilon(dt_q, \text{f}(q))$ along each direction in $D_t$ are learned so as to enforce time variance and to obtain different representations only along $D_t$. The final time-blended representation f' $(q, dt_q)$ can be described as follows:

$$\text{f}'(q, dt_q) = \text{f}(q) + \sum_{i=1}^{M} a_i \cdot d_i = \text{f}(q) + A \times D_t^T. \qquad (5)$$

In each of these variants, as mentioned before, the shift encoder model $\varepsilon$ is learnable. Besides, all proposed time-parameterized transformation variants are effective in learning time-aware video representations and can improve the target downstream tasks by capturing motion variance. When comparing the three above-described variants in their performance for downstream tasks, the inventors found that the third variant (linear transformation with dictionary) is most effective and is beneficial as a generic methodology for learning time-aware spatio-temporal representations.

Finally, the training method comprises training the encoder model f based on the offset encoded sequences 26. In this embodiment, the contrastive learning approach aims at learning representations invariant to positive pairs. This is achieved by maximizing the mutual information of positive pairs, while pushing negative pairs apart.

In an embodiment, the encoder model f is trained based on a distance between the offset encoded query f'(q) and one or more of the offset encoded at least one key $\text{f}'(k_p^+)$. Specifically, the training may comprise updating the encoder model f to minimize a distance between the offset encoded query f' (q) and an offset encoded keys $\text{f}'(k_p^+)$ obtained from the same input signal as the query q.

Conversely, negative keys may be used: the training may comprise updating the encoder model f to maximize a distance between the offset encoded query f'(q) and an offset encoded at least one other key $\text{f}'(k_n^-)$ obtained from a different input signal than the query q. $k_n^-$ is a so-called negative key.

For instance, the new keys may be encoded on-the-fly by an explicit momentum-updated encoder (e.g. as in [REFS. 3, 4]), in order to maintain a queue (memory) of keys as the negative samples for other videos. The momentum encoder weights $\theta_m$ are updated with an annealed momentum m

$$m = 1 - (1 - m_{base}) \cdot \frac{1}{2}(\cos(\pi v / V) + 1), \qquad (6)$$

with v being the current iteration and V denoting the maximum number of training iterations. There is an LTN module in the momentum encoder for all keys with their time information and there is no backpropagation into the momentum-encoder weights $\theta_m$.

As regards the contrastive loss, general contrastive learning (see Fig. 3) is applied to train the encoder model f to encourage similarities between the time-blended positive representations, $\text{f}'(q), \text{f}'(k_1^+), \ldots, \text{f}'(k_P^+)$, and discourage similarities between negative representations, $\text{f}'(k_1^-), \ldots, \text{f}'(k_N^-)$. Contrastive learning is known per se in the art and may be implemented in any suitable manner. In the present example, the InfoNCE [REF. 5] objective is defined as follows:

$$\mathcal{L}_q = \sum_{p=1}^{P} \mathcal{L}_{NCE} = -\mathbb{E}\left[\log \frac{\sum_{p=1}^{P} exp\left(Sim\left(f'\left(q\right), f'\left(k_p^+\right)\right)\right)}{\sum_{n=1}^{N} exp\left(Sim\left(f'\left(q\right), f'\left(k_n^-\right)\right)\right)}\right], \tag{7}$$

where $P$ represents the number of positive keys, N denotes the number of negative keys, and the similarity is computed as

$$Sim\left(x, y\right) = \frac{\phi(x) \cdot \phi(y)}{\|\phi(x)\| \cdot \|\phi(y)\|} \cdot \frac{1}{Temp}, \tag{8}$$

where *Temp* refers to the temperature hyper-parameter as in [REF. 6], and $\phi$ is a learnable mapping function (*e.g.*, an MLP projection head) that can substantially improve the learned representations.

Experiments conducted on different datasets and different momentum-based contrastive models have shown that the proposed training method brings an improvement for all the tested models. As a contrastive model, MoCo [REF. 4] may be used. The per-class accuracy shows that classification based on an encoder model trained by the proposed training method is able to effectively classify the motion-based actions, especially if they involve sequential information.

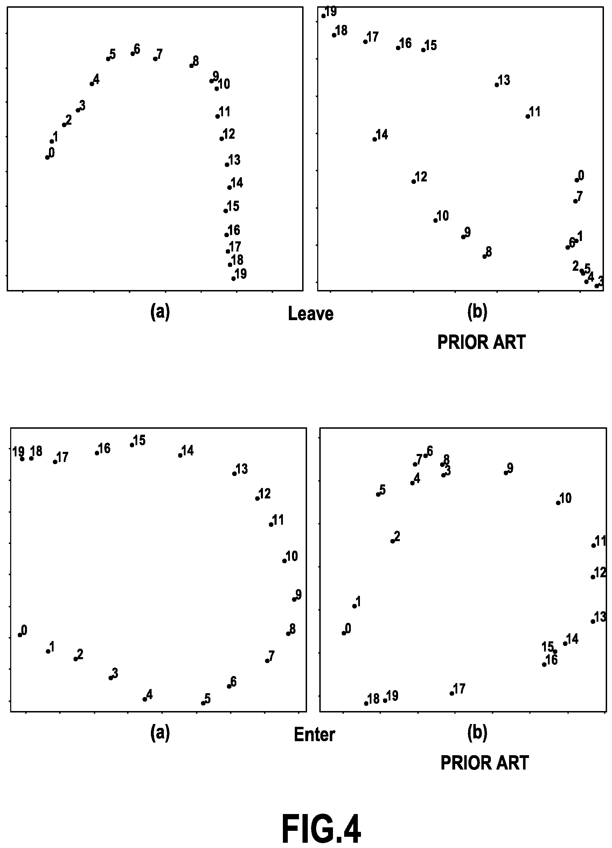

In this respect, Fig. 4 provides a visual representation of the benefits of the proposed training method. For two videos representing actions "enter" and "leave" which are correctly classified by the classifier, twenty segments are sampled for each video, numbered from 0 to 19. Figure 4 shows the visual representations of these sampled segments by t-SNE [REF. 7]. t-distributed stochastic neighbor embedding (t-SNE) is a statistical method for visualizing high-dimensional data by giving each datapoint a location in a two or three-dimensional map. It can show the learned representations of different video segments in a 2D figure to verify if they are clustered and well arranged. In Fig. 4, visual representations are shown (a) for the encoder model trained according to an embodiment and (b) the encoder model trained according to the prior art. The plots show that the representations learned by LTN are time-aware. For instance, the representations of (a) move uniformly with time, while they do not in (b). Moreover, the representations of (a) provide a clear distinction between similar actions such as 'enter' and 'leave', whereas the prior art representations of (b) do not. Therefore, these actions can be effectively distinguished by learning such representations.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A computer-implemented method for training an encoder model (f) to extract features from an input signal comprising a sequence of frames, the computer-implemented method comprising:

 - obtaining at least one subsequence (20) from at least one such input signal;
 - encoding (22) the at least one subsequence with the encoder model (f);
 - offsetting the encoded at least one subsequence (24) based on a shift between the sequence of the at least one input signal and the at least one subsequence;
 - training (30) the encoder model (f) based on the offset encoded at least one subsequence (26).

2. The method of claim 1, wherein the training comprises self-supervised learning, optionally wherein the training comprises contrastive learning.

3. The method of claim 1 or 2, wherein the at least one subsequence comprises one subsequence as a query (q) and at least another subsequence as at least one key ($k_1^+, k_2^+, \ldots, k_P^+$), and the encoder model (f) is trained based on a distance between the offset encoded query (f'(q)) and one or more of the offset encoded at least one key ($f'\left(k_1^+\right), \ldots, f'\left(k_P^+\right)$), optionally wherein the training comprises updating the encoder model (f) to minimize a distance between the offset encoded query (f'(q)) and an offset encoded at least one key ($f'\left(k_1^+\right), \ldots, f'\left(k_P^+\right)$) obtained from the same input signal as the query (q).

4. The method of claim 3, wherein the query (q) and the at least one key ( $k_1^+, k_2^+, \ldots, k_P^+$ ) are obtained by data augmentation of the input signal.

5. The method of any one of claims 1 to 4, wherein one or more of the encoded at least one subsequence (24) is a vector and the offsetting changes at least one component of the vector, optionally wherein the offsetting leaves at least one component of the vector unchanged.

6. The method of any one of claims 1 to 5, wherein the offsetting comprises applying a transformation ($\varepsilon$) to the encoded at least one subsequence (24), wherein the transformation ($\varepsilon$) is based on the shift (dt) and the transformation ($\varepsilon$) is learned during the training (30) of the encoder model (f).

7. The method of any one of claims 1 to 6, wherein the offsetting comprises inputting the shift (dt) and the encoded at least one subsequence to a shift encoder model, wherein the shift encoder model outputs a shift vector (A) and the shift vector is combined to the encoded at least one subsequence (24).

8. The method of claim 7, wherein the offsetting comprises obtaining a basis ($D_t$) of a subspace of an output space (28) of the encoder model (f), and combining the shift vector (A) and the encoded at least one subsequence (24) based on the basis ($D_t$).

9. The method of claim 8, wherein the offsetting comprises applying an attention mechanism, and the shift vector (A) and the encoded at least one subsequence (24) are combined using attention weights of the attention mechanism in different directions of the basis ($D_t$).

10. The method of claim 8, wherein the offsetting comprises projecting the shift vector (A) onto the basis ($D_t$) and calculating a linear combination of the projected shift vector (A) and the encoded at least one subsequence (24).

11. The method of any one of claims 1 to 10, wherein the sequence of frames is a sequence over time and the shift is a time shift, or wherein the input signal is selected from a group comprising a plurality of images, a video, an audio track, an electrical input or a combination thereof.

12. The method of claim 11, wherein the obtaining the at least one subsequence (20) comprises spatio-temporal cropping of the input signal.

13. A computer-implemented method for classifying actions in a visual input, the computer-implemented method comprises training an encoder model (f) by the method of any one of claims 1 to 12, inputting the visual input to the encoder model and inputting an output of the encoder model to an action classifier.

14. A computer program set including instructions for executing the steps of the method of any one of claims 1 to 13 when said program set is executed by at least one computer.

15. A system (10) for training an encoder model (f) to extract features from an input signal comprising a sequence of frames, the system comprising:

    - an obtaining module (12) configured to obtain at least one subsequence (20) from at least one such input signal;
    - an encoder module (14) configured to encode the at least one subsequence (20) with the encoder model (f);
    - an offsetting module (16) configured to offset the encoded at least one subsequence (24) based on a shift between the sequence of the at least one input signal and the at least one subsequence (20);
    - a training module (18) configured to train the encoder model (f) based on the offset encoded at least one subsequence (26).

**Amended claims in accordance with Rule 137(2) EPC.**

1. A computer-implemented method for training an encoder model (f) to extract features from an input signal comprising a sequence of frames, the computer-implemented method comprising:

- obtaining at least one subsequence (20) from at least one such input signal;
- encoding (22) the at least one subsequence into a representation space (28) with the encoder model (f);
- offsetting the encoded at least one subsequence (24) in the representation space (28) based on a shift between the sequence of the at least one input signal and the at least one subsequence;
- training (30) the encoder model (f) based on the offset encoded at least one subsequence (26).

**2.** The method of claim 1, wherein the training comprises self-supervised learning, optionally wherein the training comprises contrastive learning.

**3.** The method of claim 1 or 2, wherein the at least one subsequence comprises one subsequence as a query (q) and at least another subsequence as at least one key ( $k_1^+, k_2^+, \ldots, k_P^+$ ), and the encoder model (f) is trained based on a distance between the offset encoded query (f'(q)) and one or more of the offset encoded at least one key ( $f'(k_1^+), \ldots, f'(k_P^+)$ ), optionally wherein the training comprises updating the encoder model (f) to minimize a distance between the offset encoded query (f'(q)) and an offset encoded at least one key ( $f'(k_1^+), \ldots, f'(k_P^+)$ ) obtained from the same input signal as the query (q).

**4.** The method of claim 3, wherein the query (q) and the at least one key ( $k_1^+, k_2^+, \ldots, k_P^+$ ) are obtained by data augmentation of the input signal.

**5.** The method of any one of claims 1 to 4, wherein one or more of the encoded at least one subsequence (24) is a vector and the offsetting changes at least one component of the vector, optionally wherein the offsetting leaves at least one component of the vector unchanged.

**6.** The method of any one of claims 1 to 5, wherein the offsetting comprises applying a transformation ($\varepsilon$) to the encoded at least one subsequence (24), wherein the transformation ($\varepsilon$) is based on the shift (dt) and the transformation ($\varepsilon$) is learned during the training (30) of the encoder model (f).

**7.** The method of any one of claims 1 to 6, wherein the offsetting comprises inputting the shift (dt) and the encoded at least one subsequence to a shift encoder model, wherein the shift encoder model outputs a shift vector (A) and the shift vector is combined to the encoded at least one subsequence (24).

**8.** The method of claim 7, wherein the offsetting comprises obtaining a basis ($D_t$) of a subspace of an output space (28) of the encoder model (f), and combining the shift vector (A) and the encoded at least one subsequence (24) based on the basis ($D_t$).

**9.** The method of claim 8, wherein the offsetting comprises applying an attention mechanism, and the shift vector (A) and the encoded at least one subsequence (24) are combined using attention weights of the attention mechanism in different directions of the basis ($D_t$).

**10.** The method of claim 8, wherein the offsetting comprises projecting the shift vector (A) onto the basis ($D_t$) and calculating a linear combination of the projected shift vector (A) and the encoded at least one subsequence (24).

**11.** The method of any one of claims 1 to 10, wherein the sequence of frames is a sequence over time and the shift is a time shift, or wherein the input signal is selected from a group comprising a plurality of images, a video, an audio track, an electrical input or a combination thereof.

**12.** The method of claim 11, wherein the obtaining the at least one subsequence (20) comprises spatio-temporal cropping of the input signal.

**13.** A computer-implemented method for classifying actions in a visual input, the computer-implemented method comprises training an encoder model (f) by the method of any one of claims 1 to 12, inputting the visual input to the encoder model and inputting an output of the encoder model to an action classifier.

**14.** A computer program set including instructions for executing the steps of the method of any one of claims 1 to 13 when said program set is executed by at least one computer.

**15.** A system (10) for training an encoder model (f) to extract features from an input signal comprising a sequence of frames, the system comprising:

- an obtaining module (12) configured to obtain at least one subsequence (20) from at least one such input signal;
- an encoder module (14) configured to encode the at least one subsequence (20) into a representation space (28) with the encoder model (f);
- an offsetting module (16) configured to offset the encoded at least one subsequence (24) in the representation space (28) based on a shift between the sequence of the at least one input signal and the at least one subsequence (20);
- a training module (18) configured to train the encoder model (f) based on the offset encoded at least one subsequence (26).

**1.** A computer-implemented method for training an encoder model (f) to extract features from an input signal comprising a sequence of frames, the computer-implemented method comprising:

- obtaining at least one subsequence (20) from at least one such input signal;
- encoding (22) the at least one subsequence with the encoder model (f);
- offsetting the encoded at least one subsequence (24) based on a shift between the sequence of the at least one input signal and the at least one subsequence;
- training (30) the encoder model (f) based on the offset encoded at least one subsequence (26), wherein the offsetting comprises inputting the shift (dt) and the encoded at least one subsequence to a shift encoder model, wherein the shift encoder model outputs a shift vector (A) and the shift vector is combined to the encoded at least one subsequence (24), and wherein the offsetting comprises obtaining a basis ($D_t$) of a subspace of an output space (28) of the encoder model (f), and combining the shift vector (A) and the encoded at least one subsequence (24) based on the basis ($D_t$).

**2.** The method of claim 1, wherein the training comprises self-supervised learning, optionally wherein the training comprises contrastive learning.

**3.** The method of claim 1 or 2, wherein the at least one subsequence comprises one subsequence as a query (q) and at least another subsequence as at least one key ( $k_1^+, k_2^+, \ldots, k_P^+$ ), and the encoder model (f) is trained based on a distance between the offset encoded query (f'(q)) and one or more of the offset encoded at least one key ( $f'(k_1^+), \ldots, f'(k_P^+)$ ), optionally wherein the training comprises updating the encoder model (f) to minimize a distance between the offset encoded query (f'(q)) and an offset encoded at least one key ( $f'(k_1^+), \ldots, f'(k_P^+)$ ) obtained from the same input signal as the query (q).

**4.** The method of claim 3, wherein the query (q) and the at least one key ( $k_1^+, k_2^+, \ldots, k_P^+$ ) are obtained by data augmentation of the input signal.

**5.** The method of any one of claims 1 to 4, wherein one or more of the encoded at least one subsequence (24) is a vector and the offsetting changes at least one component of the vector, optionally wherein the offsetting leaves at least one component of the vector unchanged.

**6.** The method of any one of claims 1 to 5, wherein the offsetting comprises applying a transformation ($\varepsilon$) to the encoded at least one subsequence (24), wherein the transformation ($\varepsilon$) is based on the shift (dt) and the transformation ($\varepsilon$) is learned during the training (30) of the encoder model (f).

**7.** The method of any one of claims 1 to 6, wherein the offsetting comprises applying an attention mechanism, and the shift vector (A) and the encoded at least one subsequence (24) are combined using attention weights of the attention mechanism in different directions of the basis ($D_t$).

**8.** The method of any one of claims 1 to 7, wherein the offsetting comprises projecting the shift vector (A) onto the basis ($D_t$) and calculating a linear combination of the projected shift vector (A) and the encoded at least one subsequence (24).

**9.** The method of any one of claims 1 to 8, wherein the sequence of frames is a sequence over time and the shift is a time shift, or wherein the input signal is selected from a group comprising a plurality of images, a video, an audio track, an electrical input or a combination thereof.

**10.** The method of claim 9, wherein the obtaining the at least one subsequence (20) comprises spatio-temporal cropping of the input signal.

**11.** A computer-implemented method for classifying actions in a visual input, the computer-implemented method comprises training an encoder model (f) by the method of any one of claims 1 to 10, inputting the visual input to the encoder model and inputting an output of the encoder model to an action classifier.

**12.** A computer program set including instructions for executing the steps of the method of any one of claims 1 to 11 when said program set is executed by at least one computer.

**13.** A system (10) for training an encoder model (f) to extract features from an input signal comprising a sequence of frames, the system comprising:

- an obtaining module (12) configured to obtain at least one subsequence (20) from at least one such input signal;
- an encoder module (14) configured to encode the at least one subsequence (20) with the encoder model (f);
- an offsetting module (16) configured to offset the encoded at least one subsequence (24) based on a shift between the sequence of the at least one input signal and the at least one subsequence (20);
- a training module (18) configured to train the encoder model (f) based on the offset encoded at least one subsequence (26),

wherein the offsetting comprises inputting the shift (dt) and the encoded at least one subsequence to a shift encoder model, wherein the shift encoder model outputs a shift vector (A) and the shift vector is combined to the encoded at least one subsequence (24), and wherein the offsetting comprises obtaining a basis ($D_t$) of a subspace of an output space (28) of the encoder model (f), and combining the shift vector (A) and the encoded at least one subsequence (24) based on the basis ($D_t$).

FIG.1

FIG.2

FIG.3

(a)       Leave       (b)

PRIOR ART

(a)       Enter       (b)

PRIOR ART

# FIG.4

EP 4 411 671 A1

Europäisches Patentamt
European Patent Office
Office européen des brevets

# EUROPEAN SEARCH REPORT

Application Number

EP 23 30 5147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN SUN ET AL: "Composable Augmentation Encoding for Video Representation Learning", ARXIV.ORG, CORNELL UNIVERSITY LIBRARY, 201 OLIN LIBRARY CORNELL UNIVERSITY ITHACA, NY 14853, 20 August 2021 (2021-08-20), XP091024318, | 1-7, 11-15 | INV. G06V20/40 G06V40/20 G06V10/774 G06V10/82 |
| A | * sections 3 and 4; figures 1,2 * ----- | 8-10 | |
| A | FEICHTENHOFER CHRISTOPH ET AL: "A Large-Scale Study on Unsupervised Spatiotemporal Representation Learning", 2021 IEEE/CVF CONFERENCE ON COMPUTER VISION AND PATTERN RECOGNITION (CVPR), IEEE, 20 June 2021 (2021-06-20), pages 3298-3308, XP034009016, DOI: 10.1109/CVPR46437.2021.00331 [retrieved on 2021-10-15] * sections 3 and 4 * ----- | 1-15 | |
| A | PERRETT TOBY ET AL: "Temporal-Relational CrossTransformers for Few-Shot Action Recognition", 2021 IEEE/CVF CONFERENCE ON COMPUTER VISION AND PATTERN RECOGNITION (CVPR), IEEE, 20 June 2021 (2021-06-20), pages 475-484, XP034006571, DOI: 10.1109/CVPR46437.2021.00054 [retrieved on 2021-10-15] * sections 3 and 4; figure 2 * ----- | 1-15 | **TECHNICAL FIELDS SEARCHED (IPC)** G06V G06F |

The present search report has been drawn up for all claims

| Place of search | Date of completion of the search | Examiner |
|---|---|---|
| The Hague | 19 May 2023 | Atmatzidis, Lazaros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

# EP 4 411 671 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHRISTOPH FEICHTENHOFER ; HAOQI FAN ; JI-TENDRA MALIK ; KAIMING HE.** Slowfast networks for video recognition. *ICCV,* 2019
- **K. HARA ; H. KATAOKA ; Y. SATOH.** Learning spatio-temporal features with 3D residual networks for action recognition. *ICCVW,* 2017
- **JEAN-BASTIEN GRILL, FLORIAN STRUB, FLORENT ALTCHÉ, CORENTIN TALLEC, PIERRE H. RICHEMOND, ELENA BUCHATSKAYA, CARL DOERSCH, BERNARDO AVILA PIRES, ZHAO-HAN DANIEL, MICHAEL VALKO.** Bootstrap your own latent: A new approach to self-supervised learning. *NeurIPS,* 2020
- **KAIMING HE ; HAOQI FAN ; YUXIN WU ; SAINING XIE ; ROSS GIRSHICK.** Momentum contrast for unsupervised visual representation learning. *CVPR,* 2020
- **AARON VAN DEN OORD ; YAZHE LI ; ORIOL VINYALS.** Representation learning with contrastive predictive coding. *arXiv:1807.03748,* 2018
- **Z. WU ; Y. XIONG ; S. X. YU ; D. LIN.** Unsupervised feature learning via non-parametric instance discrimination. *CVPR,* 2018
- **LAURENS VAN DER MAATEN ; GEOFFREY HINTON.** Visualizing data using t-SNE. *JMLR,* 2008